(19) Europäisches Patentamt / European Patent Office / Office européen des brevets

(11) **EP 3 975 483 B1**

(12) **EUROPEAN PATENT SPECIFICATION**

(45) Date of publication and mention
of the grant of the patent:
**23.04.2025 Bulletin 2025/17**

(21) Application number: **20835195.7**

(22) Date of filing: **22.06.2020**

(51) International Patent Classification (IPC):
*H04L 47/11* (2022.01)   *H04W 28/02* (2009.01)
*H04L 43/065* (2022.01)   *H04L 43/067* (2022.01)
*H04L 43/0817* (2022.01)   *H04L 43/0894* (2022.01)
*H04W 24/10* (2009.01)   *H04L 47/12* (2022.01)

(52) Cooperative Patent Classification (CPC):
**H04W 24/10; H04L 43/065; H04L 43/067;
H04L 43/0817; H04L 43/0894; H04L 47/11;
H04L 47/115; H04L 47/12**

(86) International application number:
**PCT/CN2020/097315**

(87) International publication number:
**WO 2021/000753 (07.01.2021 Gazette 2021/01)**

(54) **CONGESTION MEASUREMENT METHOD AND NETWORK NODE**

ÜBERLASTUNGSMESSUNGSVERFAHREN UND NETZWERKKNOTEN

PROCÉDÉ DE MESURE DE CONGESTION ET NOEUD DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2019 CN 201910586703**

(43) Date of publication of application:
**30.03.2022 Bulletin 2022/13**

(73) Proprietor: **Huawei Technologies Co., Ltd.
Longgang
Shenzhen, Guangdong 518129 (CN)**

(72) Inventors:
• **LU, Xiaogang
Shenzhen, Guangdong 518129 (CN)**
• **GAO, Hongliang
Shenzhen, Guangdong 518129 (CN)**
• **CHENG, Liang
Shenzhen, Guangdong 518129 (CN)**
• **DANG, Juanna
Shenzhen, Guangdong 518129 (CN)**
• **LI, Dongfeng
Shenzhen, Guangdong 518129 (CN)**

(74) Representative: **Thun, Clemens
Mitscherlich PartmbB
Patent- und Rechtsanwälte
Karlstraße 7
80333 München (DE)**

(56) References cited:
EP-A1- 3 661 137     WO-A1-2016/043891
WO-A1-2016/119822     WO-A1-2019/033857
WO-A2-2016/029195     CN-A- 105 704 057
CN-A- 105 791 008     US-A1- 2012 120 801

## Description

### TECHNICAL FIELD

This application relates to the communication field, and more specifically, to a congestion measurement method and a network node.

### BACKGROUND

With development of the Internet, users have higher requirements on network quality. Network providers need tools and methods for measuring networks to monitor the networks and control network quality to meet user needs. Currently, network adjustment is performed on a data plane, to provide network repair requirements, but a congestion status of a network path needs to be sensed at a millisecond level, so as to adjust traffic to reduce packet loss.
The document WO 2019/033857 A1 shows a packet control method and an according network device. Especially, the document shows methods to detect congestions situations related to data flows and to provide the information about the congestion status via an isolation message.
The document US 2012/120801 A1 shows network-friendly transmission control protocol methods, and according apparatuses and articles of manufacture.
The document WO 2016/119822 A1 shows a system and method for traffic flow monitoring in communication networks.
The state of the art shows a sub-optimal congestion monitoring. Therefore, the object of the present invention is to provide an improved congestion monitoring.

### SUMMARY

The present invention is defined by the independent claims. Further advantageous developments are shown by the dependent claims.
This application provides a congestion measurement method and a network node, to improve congestion measurement accuracy, so as to meet adjustment requirements on a data plane.

### BRIEF DESCRIPTION OF DRAWINGS

FIG. 1 is a schematic diagram of forwarding an SRv6 packet;
FIG. 2 is a schematic diagram of a moment at which two network nodes send a packet on a single path;
FIG. 3 is a schematic flowchart of a congestion measurement method 300 according to an embodiment of this application;
FIG. 4 shows a form of a setting packet according to an embodiment of this application;

FIG. 5 shows a form of an acknowledgment packet according to an embodiment of this application;
FIG. 6 shows a form of a statistics packet according to an embodiment of this application;
FIG. 7 is a schematic diagram of moments at which a network node sends a delimitation packet and generates a statistics packet according to an embodiment of this application;
FIG. 8 is a schematic diagram of moments at which another network node sends a delimitation packet and generates a statistics packet according to an embodiment of this application;
FIG. 9 is a schematic block diagram of a network node according to an embodiment of this application;
FIG. 10 is another schematic block diagram of a network node according to an embodiment of this application;
FIG. 11 is a schematic block diagram of a network node according to an embodiment of this application;
FIG. 12 is another schematic block diagram of a network node according to an embodiment of this application; and
FIG. 13 is a schematic block diagram of a network system according to an embodiment of this application.

### DESCRIPTION OF EMBODIMENTS

For ease of understanding of embodiments of this application, the following descriptions are first provided before the embodiments of this application are described.
First, in the embodiments of this application, an "indication" may include a direct indication and an indirect indication, or may include an explicit indication and an implicit indication. Information indicated by a piece of information (for example, first indication information described below) is referred to as to-be-indicated information. In a specific implementation process, the to-be-indicated information may be indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is already known or pre-agreed on. For example, specific information may alternatively be indicated by using an arrangement sequence of a plurality of pieces of information that is pre-agreed on (for example, stipulated in a protocol), to reduce indication overheads to some extent.
Second, the terms "first", "second", and various numbers in the following embodiments are merely used for differentiation for ease of description, and are not used to limit the scope of the embodiments of this application. For example, the terms are used to distinguish between different packets.

Third, "protocol" in the embodiments of this application may be a standard protocol in the communication field, for example, including an LTE protocol, an NR protocol, and a related protocol applied to a future communication system. This is not limited in this application.

Fourth, "a plurality of" in the embodiments of this application means two or more. "One or more of the following items (pieces)" or a similar expression thereof refers to any combination of these items, including any combination of singular items (pieces) or plural items (pieces). For example, "at least one or more of a, b, and c" may indicate a, b, c, a and b, a and c, b and c, or a, b, and c, where a, b, and c may be singular or plural.

Fifth, the "timestamp" in the embodiments of this application is at least accurate to milliseconds. In other words, the "timestamp" may be × year × month × day × hour × minute × second × millisecond, for example, 2019-05-27 08:10:5:1. Alternatively, the "timestamp" may be × year × month × day × hour × minute × second × millisecond × microsecond, for example, 2019-05-28 13:10:8:5:10.

Sixth, the "moment" in the embodiments of this application is at least accurate to milliseconds. In other words, the "moment" may be × year × month × day × hour × minute × second × millisecond, for example, 2019-05-29 06:50:22:1. Alternatively, the "moment" may be × year × month × day × hour × minute × second × millisecond × microsecond, for example, 2019-05-30 13:46:9:5:10.

The following describes technical solutions in this application with reference to the accompanying drawings.

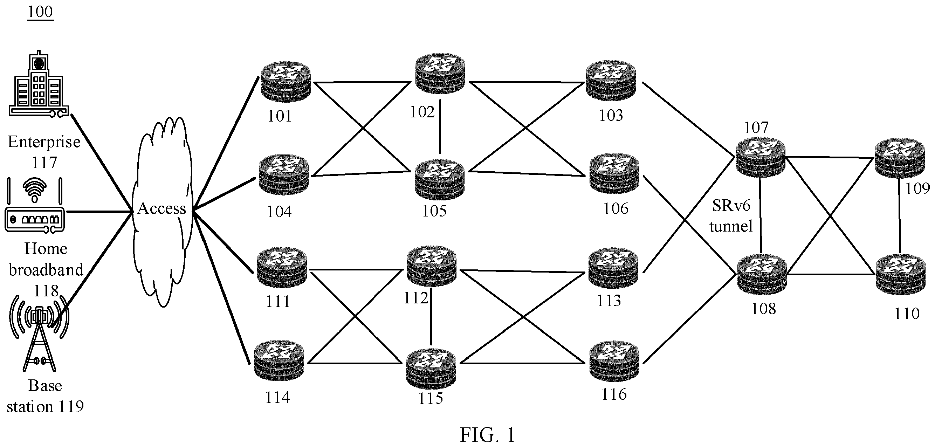

FIG. 1 is a schematic diagram of forwarding an SRv6 packet. A network 100 shown in FIG. 1 includes nodes 101 to 116, an enterprise 117, a home broadband 118, and a base station 119. The node may be a router device. The enterprise 117, the home broadband 118, and the base station 119 are separately connected to corresponding nodes, to implement packet forwarding.

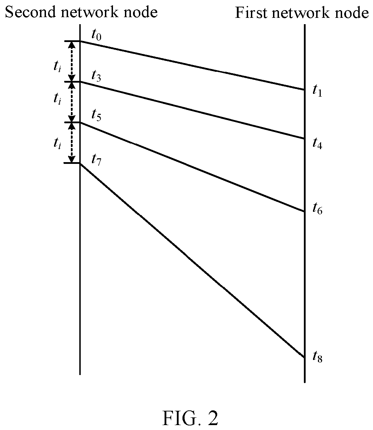

FIG. 2 is a schematic diagram of a moment at which two network nodes send a packet on a single path. A second network node may be a source (which may be understood as a transmit end), and a first network node may be a sink (which may be understood as a receive end). The second network node continuously sends measurement packets to the first network node at an equal time interval $t_i$. For example, the second network node sends four measurement packets. The second network node sends a first measurement packet at a moment $t_0$, and the first network node receives the first measurement packet at a moment $t_1$. The second network node sends a second measurement packet at a moment $t_3$, and the first network node receives the second measurement packet at a moment $t_4$. The second network node sends a third measurement packet at a moment $t_5$, and the first network node receives the third measurement packet at a moment $t_6$. The second network node sends a fourth measurement packet at a moment $t_7$, and the first network node receives the fourth measurement packet at a moment $t_8$. A time interval between $t_0$ and $t_3$ is $t_i$, a time interval between $t_3$ and $t_5$ is $t_i$, and a time interval between $t_5$ and $t_7$ is $t_i$. The first network node generates a first statistics packet corresponding to the first measurement packet in a time interval between $t_1$ and $t_4$. The first network node generates a second statistics packet corresponding to the second measurement packet in a time interval between $t_4$ and $t_6$. The first network node generates a third statistics packet corresponding to the third measurement packet in a time interval between $t_6$ and $t_8$. Because congestion statuses of paths continuously change, the time interval between $t_1$ and $t_4$, the time interval between $t_4$ and $t_6$, and the time interval between $t_6$ and $t_8$ may not be equal. Therefore, congestion measurement cannot be performed in real time, and adjustment requirements on a data plane cannot be met.

Therefore, it is urgent to provide a method that can meet adjustment requirements on a data plane.

The following describes in detail the method provided in the embodiments of this application with reference to the accompanying drawings.

In the following shown embodiments, optionally, the first network node and the second network node may be router devices.

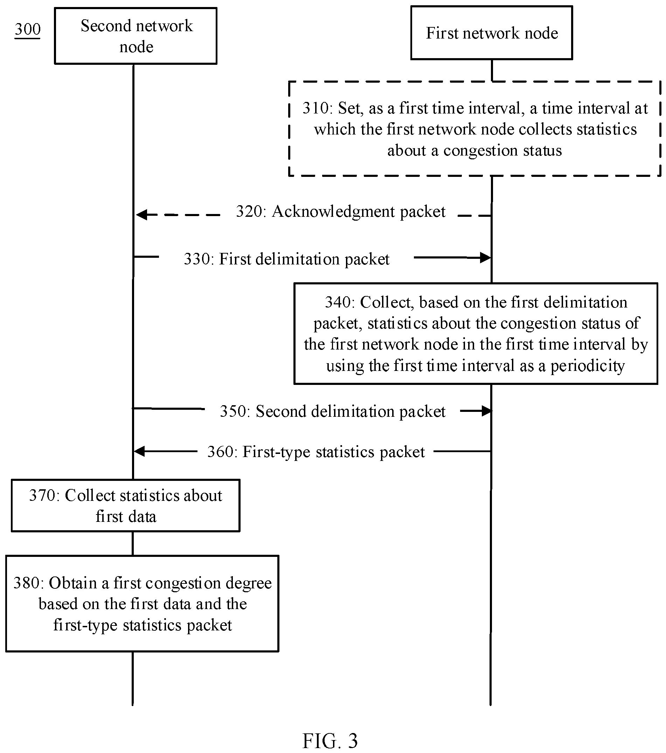

In the following, the embodiments of this application are described in detail by using an example of interaction between the first network node and the second network node. FIG. 3 is a schematic flowchart of a congestion measurement method 300 according to an embodiment of this application from a perspective of interaction between the first network node and the second network node. As shown in FIG. 3, the method 300 may include step 310 to step 280. The following describes the steps in the method 300 in detail.

The method is performed in a communication system including the first network node and the second network node. The method may be used in congestion measurement of one path between the first network node and the second network node. The path may be understood as any of a plurality of paths configured for one tunnel between the first network node and the second network node.

Step 310: The first network node sets, as a first time interval, a time interval at which the first network node collects statistics about a congestion status.

The first time interval is a time interval at which the second network node sends two neighboring delimitation packets.

In network measurement, a data packet is used as an observation sample, and two measurement packets are inserted into data traffic to bound a scope of the observation sample. The two measurement packets are delimitation packets. The delimitation packets are used to indicate that a time period in which the second network node collects statistics about the congestion status corresponds to a time period in which the first network node collects statistics about the congestion status.

For example, as shown in FIG. 2, the second network node sends a 1st delimitation packet at a moment $t_0$, and the second network node sends a 2nd delimitation packet at a moment $t_7$. The first network node receives the 1st delimitation packet at a moment $t_1$, and the first network node receives the 2nd delimitation packet at a moment $t_8$. A data packet used by the second network node as an observation sample is a data packet sent by the second network node in a time interval between the moment $t_0$ and the moment $t_7$. Correspondingly, a data packet that is used by the first network node as an observation sample and that corresponds to the data packet used by the second network node as an observation sample is a data packet received by the first network node in a time interval between the moment $t_1$ and the moment $t_8$.

The delimitation packet may be understood as a protocol packet. The delimitation packet may also be understood as a packet formed after a data packet is colored and is different from the data packet. When receiving a packet, the first network node may determine, by using a packet type indicated in a field in the packet, whether the received packet is a delimitation packet, a data packet, or a packet of another type.

The first network node may set, in the following two manners, the time interval at which the first network node collects statistics about the congestion status.

Manner 1

The first network node receives a setting packet sent by the second network node. The setting packet is used to indicate the time interval at which the first network node collects statistics about the congestion status, and the setting packet includes the first time interval.

That the setting packet includes the first time interval may be understood as that the time interval that is indicated in the setting packet and at which the first network node collects statistics about the congestion status is the first time interval.

The first network node sets, as the first time interval based on the setting packet, the time interval at which the first network node collects statistics about the congestion status. For example, the first time interval included in the setting packet may be 0.5 ms, and the first network node sets, as 0.5 ms based on the setting packet, the time interval at which the first network node collects statistics about the congestion status. For another example, the first time interval included in the setting packet may be 1 ms, and the first network node sets, as 1 ms based on the setting packet, the time interval at which the first network node collects statistics about the congestion status.

Optionally, that the first network node collects statistics about the congestion status at the time interval may be understood as that the first network node collects statistics about the congestion status of the first network node once every time interval. For example, when the first time interval is 0.5 ms, the first network node collects statistics about the congestion status of the first network node once every 0.5 ms. For another example, when the first time interval is 1 ms, the first network node collects statistics about the congestion status of the first network node once every 1 ms.

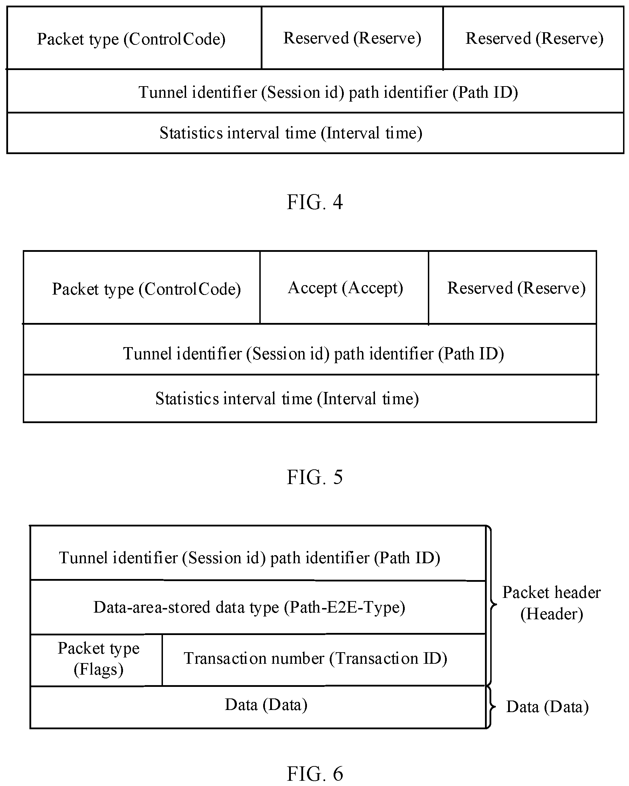

For example, a form of the setting packet may be shown in FIG. 4. The setting packet may include a packet type (Control Code) field, a tunnel identifier (Session id) path identifier (Path ID) field, and a statistics collection interval time (Interval time) field. In the packet type field, when the packet type field indicates 0, the packet is a setting packet; and when the packet type field indicates 1, the packet is an acknowledgment packet. The tunnel identifier path identifier field indicates an identifier of a tunnel path that needs to be measured. The statistics collection interval time field indicates a time interval (for example, the first time interval) at which the first network node performs statistics collection, a statistics collection interval time may occupy 16 bits, a unit of the statistics collection interval time is milliseconds (ms), and the packet type field indicates 0. The setting packet may further include two reserved (Reserve) fields.

Manner 2

The time interval at which the first network node collects statistics about the congestion status is stipulated in a communication protocol, and it is stipulated that the time interval at which the first network node collects statistics about the congestion status is the first time interval.

The first network node sets, as the first time interval according to stipulations in the communication protocol, the time interval at which the first network node collects statistics about the congestion status. For example, the first time interval stipulated in the communication protocol may be 0.6 ms, and the first network node sets, as 0.6 ms based on the first time interval stipulated in the communication protocol, the time interval at which the first network node collects statistics about the congestion status. For another example, the first time interval stipulated in the communication protocol may be 0.8 ms, and the first network node sets, as 0.8 ms based on the first time interval stipulated in the communication protocol, the time interval at which the first network node collects statistics about the congestion status.

After the first network node has set the time interval at which the first network node collects statistics about the congestion status, step 320 may be performed.

Step 320: The second network node receives an acknowledgment packet sent by the first network node, where the acknowledgment packet is used to indicate that the first network node has set the time interval at which the first network node collects statistics about the congestion status.

For example, a form of the acknowledgment packet may be shown in FIG. 5. The acknowledgment packet may include a packet type field, a tunnel identifier path identifier field, a statistics collection interval time field, and an accept (Accept) field, and the acknowledgment packet may further include a reserved field. The accept field is used to indicate a setting result part in the acknowledgment packet. If the first network node succeeds in setting based on the setting packet, the accept field indicates 0. If the first network node fails in setting based on the setting packet, the accept field indicates 1, and the packet type field indicates 1.

When the accept field in the acknowledgment packet indicates 0, the second network node starts to perform a measurement operation, that is, perform step 330.

Step 330: The second network node sends a first delimitation packet, where the first delimitation packet includes a first identifier, and the first identifier is used to indicate a moment at which the second network node sends the first delimitation packet. Correspondingly, the first network node receives the first delimitation packet.

Optionally, the moment at which the second network node sends the first delimitation packet may be a second moment, and a moment at which the first network node receives the first delimitation packet is a first moment. The first moment is later than the second moment. That the first identifier is used to indicate the moment at which the second network node sends the first delimitation packet may be understood as that the first identifier is used to indicate the second moment.

Optionally, when sending the first delimitation packet, the second network node records the first identifier, includes the first identifier in the first delimitation packet, and sends the first delimitation packet to the first network node.

Optionally, the first identifier may be a first timestamp. The first timestamp is used to indicate the moment at which the second network node sends the first delimitation packet, that is, the first timestamp is used to indicate the second moment.

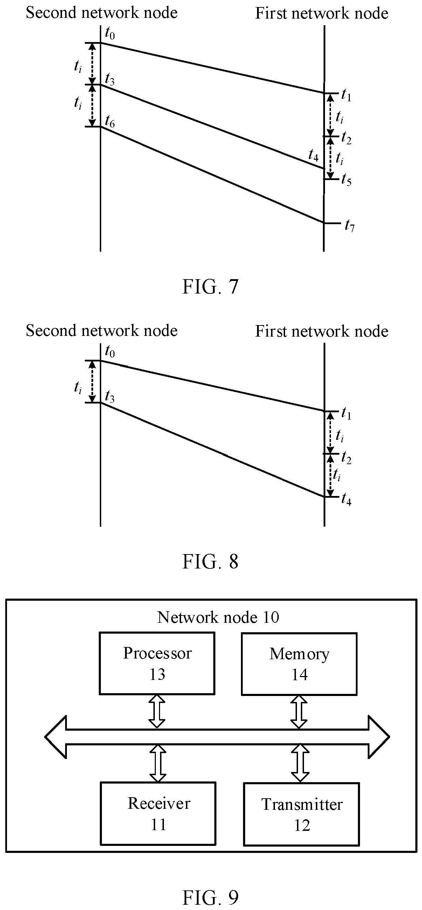

For example, as shown in FIG. 7, the second network node sends the first delimitation packet at a moment $t_0$, and the first network node receives the first delimitation packet at a moment $t_1$. Therefore, the second moment may be the moment $t_0$, the first moment may be the moment $t_1$, and the moment $t_0$ is earlier than the moment $t_1$.

Optionally, after receiving the first delimitation packet, the first network node records a third identifier. The third identifier is used to indicate the moment at which the first network node receives the first delimitation packet, that is, the first moment.

The third identifier may be a third timestamp.

The third timestamp is used to indicate the moment at which the first network node receives the first delimitation packet. In other words, the third timestamp is the first moment.

Step 340: The first network node collects, based on the first delimitation packet, statistics about the congestion status of the first network node in the first time interval by using the first time interval as a periodicity, where the first time interval is a time interval at which the second network node sends two neighboring delimitation packets.

Optionally, when starting to collect statistics about the congestion status in the first time interval, the first network node records an identifier. The identifier is used to indicate a moment at which the first network node starts statistics collection. The identifier may be a timestamp.

Optionally, that the first network node collects, based on the first delimitation packet, statistics about the congestion status of the first network node in the first time interval by using the first time interval as a periodicity may be understood as that after receiving the first delimitation packet, the first network node collects statistics about the congestion status of the first network node in a corresponding first time interval once every first time interval.

For example, as shown in FIG. 7, the first network node receives the first delimitation packet at the moment $t_1$, and collects statistics about the congestion status in the first time interval based on the first delimitation packet. The first time interval is $t_i$, that is, the first network node collects statistics about the congestion status of the first network node once every first time interval $t_i$ starting from the moment $t_1$.

The congestion status of the first network node in the first time interval may be understood as a receiving rate of the first network node in the first time interval. Alternatively, the congestion status of the first network node in the first time interval may be understood as a quantity of data packets that are received by the first network node in the first time interval.

Step 350: The second network node sends a second delimitation packet, where the second delimitation packet includes a second identifier, and the second identifier is used to indicate a moment at which the second network node sends the second delimitation packet; the second delimitation packet and the first delimitation packet are two neighboring delimitation packets; and a time interval at which the second network node sends the two neighboring delimitation packets is the first time interval. Correspondingly, the first network node receives the second delimitation packet at a third moment. A time interval between the third moment and the first moment is greater than the first time interval, and the first moment is the moment at which the first network node receives the first delimitation packet.

Optionally, when sending the second delimitation packet, the second network node records the second identifier, includes the second identifier in the second delimitation packet, and sends the second delimitation packet to the first network node.

Optionally, the moment at which the second network node sends the second delimitation packet may be a fourth moment.

Optionally, the second identifier may be a second timestamp. The second timestamp is used to indicate the moment at which the second network node sends the second delimitation packet, that is, the second timestamp is used to indicate the fourth moment.

That the second delimitation packet and the first delimitation packet are two neighboring delimitation packets may be understood as that the second network node respectively sends the first delimitation packet and the second delimitation packet to the first network node at moments whose difference is the first time interval, and the second network node does not send another delimitation packet in the first time interval; or that the second delimitation packet and the first delimitation packet are two neighboring delimitation packets may be understood as that the first network node respectively receives, at moments whose difference is the first time interval, the first delimitation packet and the second delimitation packet that are sent by the second network node, and the first network node does not receive another delimitation packet in the first time interval.

For example, as shown in FIG. 7, the second network node sends the first delimitation packet at the moment $t_0$, and the first network node receives the first delimitation packet at the moment $t_1$. The second network node sends the second delimitation packet at a moment $t_3$, and the first network node receives the second delimitation packet at a moment $t_4$. The fourth moment may be the moment $t_3$, the third moment may be the moment $t_4$, the moment $t_3$ is earlier than the moment $t_4$, the first time interval is $t_i$, and a time interval between the moment $t_1$ and the moment $t_4$ is greater than $t_i$.

Step 360: The first network node sends a first-type statistics packet to the second network node by using the first time interval as a periodicity, where the first-type statistics packet includes the first identifier, and the first-type statistics packet is used to indicate the congestion status of the first network node in the first time interval. Correspondingly, the second network node receives, by using the first time interval as a periodicity, the first-type statistics packet sent by the first network node.

Optionally, that the first network node sends a first-type statistics packet to the second network node by using the first time interval as a periodicity may be understood as that the first network node sends the first-type statistics packet to the second network node by using the first moment as a start moment and by using the first time interval as a periodicity. In other words, a moment at which the first network node sends the first-type statistics packet may be $T_i = t_1 + Nt_i$. $t_1$ is the moment at which the first network node receives the first delimitation packet, that is, the first moment, N is a positive integer, and $t_i$ is the

first time interval.

For example, a form of the statistics packet is shown in FIG. 6. The statistics packet may include two parts: a packet header (Header) and data (Data). The packet header may include a tunnel identifier path identifier field, a data-area-stored data type (Path-E2E-Type) field, a packet type (Flags) field, and a transaction number (Transaction ID) field. The tunnel identifier path identifier field is used to indicate an identifier of a path about which the first network node collects statistics. In the data-area-stored data type field, for example, data-area-stored data may be a timestamp and/or a quantity of packets. The timestamp may be indicated by using Bit 0, and the timestamp may be understood as two moments, that is, a start moment and an end moment. The quantity of packets may be indicated by using Bit 1, and the quantity of packets may be a quantity of packets between the start moment and the end moment. The data-area-stored data type field may store a plurality of fields. In the packet type (Flags) field, when the packet type field is indicated by using Bit 0, the type of a packet is a statistics packet. When the packet type field is indicated by using Bit 1, the type of a packet is a result packet, and other fields are temporarily reserved. One transaction number is generated each time statistics are collected. The transaction number may be understood as for which time statistics are collected. In the data part, a data type indicated by the data-area-stored data type may be a timestamp and/or a quantity of packets, for example, may be the first moment, the second moment, or a quantity of packets that are received by the first network node in a time interval between the first moment and a moment at which the first network node sends a statistics packet.

Optionally, the first-type statistics packet includes a first receiving rate of the first network node in the first time interval. Alternatively, the first-type statistics packet includes the third identifier, a fourth identifier, and a quantity of data packets that are received by the first network node, where statistics about the quantity of data packets are collected by the first network node, the third identifier is used to indicate the moment at which the first network node receives the first delimitation packet, and the fourth identifier is used to indicate a moment at which the first network node sends the first-type statistics packet.

The quantity, included in the first-type statistics packet, of the data packets that are received by the first network node may be understood as a quantity of data packets that are received by the first network node in a time interval between the first moment and the moment at which the first network node sends the first-type statistics packet.

Optionally, when sending the first-type statistics packet, the first network node records the fourth identifier and includes the fourth identifier in the first-type statistics packet. The first network node also includes the first identifier in the first delimitation packet and the third identifier recorded in the first network node together in the first-type statistics packet, and sends the first-type statistics packet to the second network node.

Optionally, the fourth identifier may be a fourth timestamp. The fourth timestamp is used to indicate the moment at which the first network node sends the first-type statistics packet.

Optionally, the fourth identifier includes the moment at which the first network node sends the first-type statistics packet.

As shown in FIG. 8, the second network node sends a first delimitation packet at a moment $t_0$, and sends a second delimitation packet at a moment $t_3$. A time interval between the moment $t_0$ and the moment $t_3$ is a first time interval $t_i$. The first network node receives the first delimitation packet at a moment $t_1$, and receives the second delimitation packet at a moment $t_4$. A time interval between the moment $t_1$ and the moment $t_4$ is two first time intervals. For example, the first-type statistics packet may include a first receiving rate of the first network node in the time interval $t_i$ between the moment $t_1$ and a moment $t_2$ $((t_1+t_i))$; or the first-type statistics packet includes the moment $t_0$, the moment $t_1$, the moment $t_2$, and a quantity of data packets that are received by the first network node in a time interval (a 1st $t_i$) between the moment $t_1$ and the moment $t_2$. For another example, the first-type statistics packet may further include a first receiving rate of the first network node in the time interval $t_i$ between the moment $t_2$ and a moment $t_4$ $((t_2 + 2t_i))$; or the first-type statistics packet includes the moment $t_3$, the moment $t_2$, the moment $t_4$, and a quantity of data packets that are received by the first network node in a time interval (a 2nd $t_i$) between the moment $t_2$ and the moment $t_4$.

Step 370: The second network node collects statistics about first data based on the first delimitation packet and the second delimitation packet, where the first data is used to indicate a congestion status in the first time interval.

Optionally, the first data may be a first sending rate in a time interval between the second moment and the fourth moment; or the first data is a quantity of data packets that are sent by the second network node in the time interval between the second moment and the fourth moment.

As shown in FIG. 8, the second network node sends the first delimitation packet at the moment $t_0$, and the second network node sends the second delimitation packet at the moment $t_3$. In other words, the second moment is the moment $t_0$, and the fourth moment is the moment $t_3$. The first data is the congestion status of the second network node in the first time interval $t_i$ between the moment $t_0$ and the moment $t_3$. The first data may be a first sending rate of the second network node in the first time interval $t_i$ between the moment $t_0$ and the moment $t_3$; or the first data may be a quantity of data packets that are sent by the second network node in the first time interval $t_i$ between the moment $t_0$ and the moment $t_3$.

Optionally, a time interval between the moment at which the first network node receives the first delimitation packet and the moment at which the first network node receives the second delimitation packet may be an integer multiple of the first time interval, For example, as shown in FIG. 8, the time interval between the moment at which the first network node receives the first delimitation packet and the moment at which the first network node receives the second delimitation packet is twice the first time interval. The time interval between the moment at which the first network node receives the first delimitation packet and the moment at which the first network node receives the second delimitation packet may not be an integer multiple of the first time interval, For example, as shown in FIG. 7, the time interval between the moment at which the first network node receives the first delimitation packet and the moment at which the first network node receives the second delimitation packet is 1.8 times the first time interval. This is not limited in this application.

Step 380: The second network node obtains a first congestion degree based on the first data and the first-type statistics packet, where the first congestion degree is used to indicate a congestion degree in the first time interval.

Optionally, after receiving the first-type statistics packet, the second network node may determine, based on the first identifier in the first-type statistics packet, that the first-type statistics packet sent by the first network node corresponds to the first data about which the second network node collects statistics. In other words, the second network node needs to obtain the first congestion degree based on the first data and the first-type statistics packet. The first congestion degree is used to indicate the congestion degree in the first time interval.

For example, as shown in FIG. 8, the first congestion degree may be a congestion degree of a corresponding path in the time interval between the moment $t_1$ and the moment $t_2$. For another example, as shown in FIG. 8, the first congestion degree may be a congestion degree of a corresponding path in the time interval between the moment $t_2$ and the moment $t_4$.

Optionally, the second network node may obtain a first congestion degree $J_1$ based on the following formula:

$$J_1 = \frac{\dfrac{a}{t_i}}{\dfrac{b}{t_i}}$$

where a is the quantity of data packets that are received by the first network node in the first time interval, b is the quantity of data packets that are sent by the second network node in the time interval between the second moment and the fourth moment, and $t_i$ is the first time interval.

For example, as shown in FIG. 8, a may be a quantity of data packets that are received by the first network node in the time interval between the moment $t_1$ and the moment $t_2$; or a may be a quantity of data packets that are received by the first network node in the time interval between the moment $t_2$ and the moment $t_4$.

For example, as shown in FIG. 8, b may be a quantity of data packets that are sent by the second network node in the time interval between the moment $t_0$ and the moment $t_3$.

Optionally, the second network node may obtain a first congestion degree $J_1$ based on the following formula:

$$ J_1 = \frac{v_1}{v_2} $$

where $v_1$ is the first receiving rate of the first network node in the first time interval, and $v_2$ is the first sending rate of the second network node in the time interval between the second moment and the fourth moment.

For example, as shown in FIG. 8, $v_1$ may be the first receiving rate of the first network node in the time interval between the moment $t_1$ and the moment $t_2$; or a may be the first receiving rate of the first network node in the time interval between the moment $t_2$ and the moment $t_4$.

For example, as shown in FIG. 8, $v_2$ may be the first sending rate of the second network node in the time interval between the moment $t_0$ and the moment $t_3$.

Optionally, when the third moment and a start moment or an end moment of the first time interval do not overlap, the second network node further needs to perform step 381 to step 386. For example, as shown in FIG. 7, the first moment may be $t_1$, the second moment may be $t_0$, the third moment may be $t_3$, and the fourth moment may be $t_4$. When $t_4$ and an end moment of 2nd $t_i$ after the moment $t_1$ at which the first network node receives the first delimitation packet do not overlap, step 381 to step 386 further need to be performed.

Step 381: The second network node receives a second-type statistics packet sent by the first network node, where the second-type statistics packet includes the first identifier, and the second-type statistics packet is used to indicate a congestion status of the first network node in a time interval between the third moment and the start moment of the first time interval in which the third moment is located. Correspondingly, the first network node sends the second-type statistics packet to the second network node at the third moment.

Optionally, the second-type statistics packet includes a second receiving rate of the first network node in the time interval between the third moment and the start moment of the first time interval in which the third moment is located. Alternatively, the second-type statistics packet includes a fifth identifier, a sixth identifier, and the quantity of data packets that are received by the first network node, where statistics about the quantity of data packets are collected by the first network node, the fifth identifier is used to indicate the start moment of the first time interval in which the third moment is located, the sixth identifier is used to indicate the third moment, and the third moment is the moment at which the first network node receives the second delimitation packet.

Optionally, when sending the second-type statistics packet, the first network node records the sixth identifier and includes the sixth identifier in the second-type statistics packet. The first network node also includes the first identifier in the first delimitation packet and the fifth identifier recorded in the first network node together in the first-type statistics packet, and sends the first-type statistics packet to the second network node.

Optionally, the fifth identifier may be a fifth timestamp. The fifth timestamp is used to indicate the start moment of the first time interval in which third moment is located.

Optionally, the sixth identifier may be a sixth timestamp. The sixth timestamp is used to indicate the third moment.

For example, as shown in FIG. 7, the second network node sends the first delimitation packet at the moment $t_0$, and sends the second delimitation packet at the moment $t_3$. The time interval between the moment $t_0$ and the moment $t_3$ is the first time interval $t_i$. The first network node receives the first delimitation packet at the moment $t_1$, and receives the second delimitation packet at the moment $t_4$. The time interval between the moment $t_1$ and the moment $t_4$ is 1.8 times the first time interval. In other words, the moment $t_4$ and an end moment (a moment $t_5$) of a 2nd first time interval do not overlap, and the first network node needs to send the second-type statistics packet to the second network node at the moment $t_4$. The second-type statistics packet includes the second receiving rate of the first network node in a time interval between a moment $t_2$ and the moment $t_4$; or the second-type statistics packet includes the moment $t_0$, the moment $t_2$, the moment $t_4$, and the quantity of data packets that are received by the first network node in the time interval between the moment $t_2$ and the moment $t_4$, where statistics about the quantity of data packets are collected by the first network node.

Step 382: The second network node obtains a second congestion degree based on the first data and the second-type statistics packet, where the second congestion degree is used to indicate a congestion degree in the time interval between the third moment and the start moment of the first time interval in which the third moment is located.

Optionally, after receiving the second-type statistics packet, the second network node may determine, based on the first identifier in the second-type statistics packet, that the second-type statistics packet sent by the first network node corresponds to the first data about which the second network node collects statistics. In other words, the second network node needs to obtain the second congestion degree based on the first data and the second-type statistics packet.

As shown in FIG. 7, the second congestion degree may be a congestion degree of a corresponding path in the time interval between the moment $t_2$ and the moment $t_4$.

Optionally, the second network node may obtain a second congestion degree $J_2$ based on the following formula:

$$J_2 = \frac{\dfrac{c}{\Delta t}}{\dfrac{b}{t_i}}$$

where c is a quantity of data packets that are received by the first network node in the time interval between the third moment and the start moment of the first time interval in which the third moment is located, and $\Delta t$ is the time interval between the third moment and the start moment of the first time interval in which the third moment is located.

For example, as shown in FIG. 7, c may be a quantity of data packets that are received by the first network node in the time interval between the moment $t_2$ and the moment $t_4$.

For example, as shown in FIG. 7, $\Delta t$ may be the time interval between the moment $t_2$ and the moment $t_4$.

Optionally, the second network node may obtain a second congestion degree $J_2$ based on the following formula:

$$J_1 = \frac{v_{11}}{v_2}$$

where $v_{11}$ is the second receiving rate of the first network node in the time interval between the third moment and the start moment of the first time interval in which the third moment is located.

For example, as shown in FIG. 7, $v_{11}$ may be the second receiving rate of the first network node in the time interval between the moment $t_2$ and the moment $t_4$.

Step 383: The second network node receives a third-type statistics packet that is sent by the first network node at the end moment of the first time interval in which the third moment is located, where the third-type statistics packet includes the second identifier, and the third-type statistics packet is used to indicate the congestion status of the first network node in the time interval between the third moment and the end moment of the first time interval in which the third moment is located. Correspondingly, the first network node collects statistics about the congestion status in the time interval between the third moment and the end moment of the first time interval in which the third moment is located, and sends the third-type statistics packet to the second network node at the end moment of the first time interval in which the third moment is located.

Optionally, the third-type statistics packet includes a third receiving rate of the first network node in the time interval between the third moment and the end moment of the first time interval in which the third moment is located. Alternatively, the third-type statistics packet includes the sixth identifier, a seventh identifier, and the quantity of data packets that are received by the first network node, where statistics about the quantity of data packets are collected by the first network node, and the seventh identifier is used to indicate the end moment of the first time interval in which the third moment is located.

Optionally, when sending the third-type statistics packet, the first network node records the seventh identifier and includes the seventh identifier in the third-type statistics packet. The first network node also includes the first identifier in the first delimitation packet and the sixth identifier recorded in the first network node together in the third-type statistics packet, and sends the third-type statistics packet to the second network node.

Optionally, the seventh identifier may be a seventh timestamp. The seventh timestamp is used to indicate the end moment of the first time interval in which third moment is located.

For example, as shown in FIG. 7, the second network node sends the first delimitation packet at the moment $t_0$, and sends the second delimitation packet at the moment $t_3$. The time interval between the moment $t_0$ and the moment $t_3$ is the first time interval $t_i$. The first network node receives the first delimitation packet at the moment $t_1$, and receives the second delimitation packet at the moment $t_4$. The time interval between the moment $t_1$ and the moment $t_4$ is 1.8 times the first time interval. In other words, the moment $t_4$ and an end moment (a moment $t_5$) of a 2nd first time interval do not overlap, and the first network node needs to send the third-type statistics packet to the second network node at the moment $t_5$. The third-type statistics packet includes the third receiving rate of the first network node in the time interval between the moment $t_4$ and the moment $t_5$; or the third-type statistics packet includes the moment $t_3$, the moment $t_4$, the moment $t_5$, and the quantity of data packets that are received by the first network node in the time interval between the moment $t_4$ and the moment $t_3$, where statistics about the quantity of data packets are collected by the first network node.

Step 384: The second network node collects statistics about second data, where the second data is used to indicate a congestion status in a time interval between the fourth moment and the fifth moment, the time interval between the fifth moment and the fourth moment is the first time interval, and the fifth moment is later than the fourth moment.

Optionally, the second data is a second sending rate in the time interval between the fourth moment and the fifth moment; or the second data is a quantity of data packets that are sent by the second network node in the time interval between the fourth moment and the fifth moment.

As shown in FIG. 7, the second data is a congestion status of the second network node in the first time interval $t_i$ between the moment $t_3$ and a moment $t_6$. The second data may be a first sending rate of the second network node in the first time interval $t_i$ between the moment $t_3$ and the moment $t_6$; or the first data may be a quantity of data packets that are sent by the second network node in the first time interval $t_i$ between the moment $t_3$ and the moment $t_6$.

Step 385: The second network node obtains a third congestion degree based on the second data and the third-type statistics packet, where the third congestion degree is used to indicate a congestion degree in the time interval between the third moment and the end moment of the first time interval in which the third moment is located.

Optionally, after receiving the third-type statistics packet, the second network node may determine, based on the second identifier in the third-type statistics packet, that the third-type statistics packet sent by the first network node corresponds to the second data about which the second network node collects statistics. In other words, the second network node needs to obtain the third congestion degree based on the second data and the third-type statistics packet.

As shown in FIG. 7, the third congestion degree may be a congestion degree of a corresponding path in the time interval between the moment $t_4$ and the moment $t_5$.

Optionally, the second network node may obtain a third congestion degree $J_3$ based on the following formula:

$$J_3 = \frac{\dfrac{e}{(t_i - \Delta t)}}{\dfrac{d}{t_i}}$$

where e is a quantity of data packets that are received by the first network node in the time interval between the third moment and the end moment of the first time interval in which the third moment is located, and d is the quantity of data packets that are sent by the second network node in the time interval between the fourth moment and the fifth moment.

For example, as shown in FIG. 7, e may be a quantity of data packets that are received by the first network node in the time interval between the moment $t_4$ and the moment $t_5$.

For example, as shown in FIG. 7, d may be a quantity of data packets that are sent by the second network node in the time interval between the moment $t_3$ and the moment $t_6$.

Optionally, the second network node may obtain a third congestion degree $J_3$ based on the following formula:

$$J_1 = \frac{v_{12}}{v_{21}}$$

where $v_{12}$ is a third receiving rate of the first network node in the time interval between the third moment and the end moment of the first time interval in which the third moment is located, and $v_{21}$ is a second sending rate of the second network node in the time interval between the fourth moment and the fifth moment.

For example, as shown in FIG. 7, $v_{12}$ may be the third receiving rate of the first network node in the time interval between the moment $t_4$ and the moment $t_5$.

For example, as shown in FIG. 7, $v_{21}$ may be the second sending rate of the second network node in the time interval between the moment $t_3$ and the moment $t_6$.

Step 386: The second network node obtains a fourth congestion degree based on the second congestion degree and the third congestion degree, where the fourth congestion degree is used to indicate a congestion degree in the first time interval in which the third moment is located.

Optionally, the second network node may determine an average value of the second congestion degree and the third congestion degree as the fourth congestion degree.

For example, as shown in FIG. 7, the second network node sends a delimitation packet to the first network node at the stipulated first time interval. In other words, the second network node sends the first delimitation packet at the moment $t_0$, and the first network node receives the first delimitation packet at the moment $t_1$. The second network node sends the second delimitation packet at the moment $t_3$, and the first network node receives the second delimitation packet at the moment $t_4$. The second network node sends a third delimitation packet at the moment $t_6$, and the first network node receives the third delimitation packet at a moment $t_7$. The second network node sends a fourth delimitation packet at a moment $t_{10}$, and the first network node receives the fourth delimitation packet at a moment $t_{11}$. A time interval between the moment $t_0$ and the moment $t_3$ is the first time interval $t_i$, a time interval between the moment $t_3$ and the moment $t_6$ is the first time interval $t_i$, and a time interval between the moment $t_6$ and the moment $t_{10}$ is the first time interval $t_i$. 1.8 first time intervals $t_i$ are included between the moment $t_1$ and the moment $t_4$, and the second network node determines a final congestion degree between $t_1$ and $t_2$ based on a congestion degree between the moment $t_1$ and the moment $t_2$ and a congestion degree between the moment $t_0$ and the moment $t_3$. Because 1.8 is not a positive integer, the second network node determines a congestion status in the time interval between the moment $t_2$ and the moment $t_5$ in the following manner. First, the first network node needs to send a congestion status of the first network node in the time interval between the moment $t_2$ and the moment $t_4$ to the second network node at the moment

$t_4$. The second network node determines a final congestion status in the time interval between the moment $t_2$ and the moment $t_4$ based on a congestion status between the moment $t_2$ and the moment $t_4$ and a congestion status of the first network node between the moment $t_0$ and the moment $t_3$. Second, the first network node needs to send the congestion status of the first network node in the time interval between the moment $t_4$ and the moment $t_5$ to the second network node at the moment $t_5$, and the second network node determines a final congestion status in the time interval between the moment $t_4$ and the moment $t_5$ based on a congestion status of the first network node in the time interval between the moment $t_4$ and the moment $t_5$ and a congestion status of the second network node between the moment $t_3$ and the moment $t_6$. Finally, the final congestion status in the time interval between the moment $t_2$ and the moment $t_4$ and the final congestion status in the time interval between the moment $t_4$ and the moment $t_5$ are determined as the congestion status in the time interval between the moment $t_2$ and the moment $t_5$. Therefore, congestion measurement accuracy is improved. In addition, the second network node may obtain a congestion status of a path between the first network node and the second network node at an equal time interval, to meet adjustment requirements on a data plane.

The method 300 may further include step 390.

Step 390: The second network node adjusts, based on the determined congestion degrees in the time intervals, traffic proportions shared on a plurality of paths in a tunnel between the first network node and the second network node.

It should be understood that sequence numbers of the foregoing processes do not mean an execution sequence in the embodiments of this application. The execution sequence of the processes should be determined based on functions and internal logic of the processes, and should not be construed as any limitation on the implementation processes of the embodiments of this application.

The congestion measurement method in the embodiments of this application is described in detail above with reference to FIG. 3 to FIG. 8. The apparatus in the embodiments of this application is described in detail below with reference to FIG. 9 to FIG. 12.

An embodiment of this application provides a network node. The following describes a structure and a function of the network node with reference to FIG. 9. FIG. 9 is a schematic block diagram of a network node 10 according to an embodiment of this application. As shown in FIG. 9, the network node 10 includes a receiver 11 and a transmitter 12. Optionally, the network node 10 further includes a processor 13 and a memory 14. The receiver 11, the transmitter 12, the processor 13, and the memory 14 communicate with each other through an inner connection path, to transfer a control signal and/or a data signal. The memory 14 is configured to store a computer program. The processor 13 is configured to invoke the computer program from the memory 14 and run the computer program, to control the receiver 11 to receive a signal, and control the transmitter 12 to send a signal. When the program stored in the memory 14 is executed by the processor 13, the receiver 11 is configured to receive a first delimitation packet, where the first delimitation packet includes a first identifier, and the first identifier is used to indicate a moment at which a second network node sends the first delimitation packet.

The processor 13 is configured to collect, based on the first delimitation packet, statistics about a congestion status of a first network node by using a first time interval as a periodicity, where the first time interval is a time interval at which the second network node sends two neighboring delimitation packets.

The transmitter 12 is configured to send a first-type statistics packet to the second network node by using the first time interval as a periodicity, where the first-type statistics packet includes the first identifier, and the first-type statistics packet is used to indicate the congestion status of the first network node in the first time interval.

The processor 13 and the memory 14 may be combined into a processing apparatus. The processor 13 is configured to execute program code stored in the memory 14, to implement the foregoing functions. In a specific implementation, the memory 14 may alternatively be integrated into the processor 13, or independent of the processor 13.

It should be understood that the network node 10 may correspond to the first network node in the congestion measurement method 300 in the network according to the embodiments of the present invention, and the network node 10 may include modules configured to perform the method performed by the first network node in the congestion measurement method 300 in the network in FIG. 3. In addition, the modules in the network node 10 and the foregoing other operations and/or functions are respectively intended to implement corresponding procedures of the congestion measurement method 300 in the network in FIG. 3. For a specific process of the foregoing corresponding steps performed by the units, refer to the foregoing description of the method embodiment in FIG. 3. For brevity, details are not described herein again.

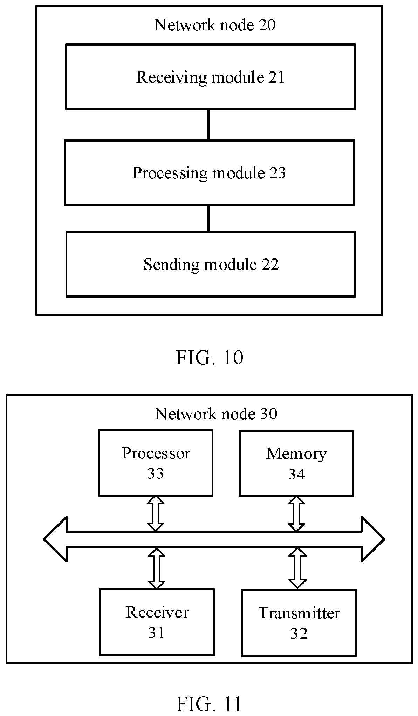

An embodiment of this application further provides a network node. The following describes a structure and a function of the network node with reference to FIG. 10. FIG. 10 is another schematic block diagram of a network node 20 according to an embodiment of this application. As shown in FIG. 10, the network node 20 includes a receiving module 21, a sending module 22, and a processing module 23.

The receiving module 21, the sending module 22, and the processing module 23 may be implemented by software or hardware. When the modules are implemented by hardware, the receiving module 21 may be the receiver 11 in FIG. 9, the sending module 22 may be the transmitter 12 in FIG. 9, and the processing module 23 may be the processor 13 in FIG. 9.

An embodiment of this application further provides another network node. The following describes a structure and a function of the network node with reference to FIG. 11. FIG. 11 is a schematic block diagram of a network node 10 according to an embodiment of this application. As shown in FIG. 11, the network node 30 includes a receiver 31 and a transmitter 32. Optionally, the network node 30 further includes a processor 33 and a memory 34. The receiver 31, the transmitter 32, the processor 33, and the memory 34 communicate with each other through an inner connection path, to transfer a control signal and/or a data signal. The memory 34 is configured to store a computer program. The processor 33 is configured to invoke the computer program from the memory 34 and run the computer program, to control the receiver 31 to receive a signal, and control the transmitter 32 to send a signal. When the program stored in the memory 34 is executed by the processor 33, the transmitter 32 is configured to send a first delimitation packet, where the first delimitation packet includes a first identifier, and the first identifier is used to indicate a moment at which a second network node sends the first delimitation packet.

The transmitter 32 is further configured to send a second delimitation packet, where the second delimitation packet includes a second identifier, and the second identifier is used to indicate a moment at which the second network node sends the second delimitation packet; the second delimitation packet and the first delimitation packet are two neighboring delimitation packets; and a time interval at which the second network node sends the two neighboring delimitation packets is a first time interval.

The processor 33 is configured to collect statistics about first data based on the first delimitation packet and the second delimitation packet, where the first data is used to indicate a congestion status in the first time interval.

The receiver 31 is configured to receive, by using the first time interval as a periodicity, a first-type statistics packet sent by a first network node, where the first-type statistics packet includes the first identifier, and the first-type statistics packet is used to indicate a congestion status of the first network node in the first time interval.

The processor 33 is further configured to obtain a first congestion degree based on the first data and the first-type statistics packet, where the first congestion degree is used to indicate a congestion degree in the first time interval.

The processor 33 and the memory 34 may be integrated into one processing apparatus. The processor 33 is configured to execute program code stored in the memory 34 to implement the foregoing functions. In a specific implementation, the memory 34 may alternatively be integrated into the processor 33, or independent of the processor 33.

It should be understood that the network node 30 may correspond to the second network node in the congestion measurement method 300 in the network according to the embodiments of the present invention, and the network node 30 may include modules configured to perform the method performed by the second network node in the congestion measurement method 300 in the network in FIG. 3. In addition, the modules in the network node 30 and the foregoing other operations and/or functions are respectively intended to implement corresponding procedures of the congestion measurement method 300 in the network in FIG. 3. For a specific process of the foregoing corresponding steps performed by the units, refer to the foregoing description of the method embodiment in FIG. 3. For brevity, details are not described herein again.

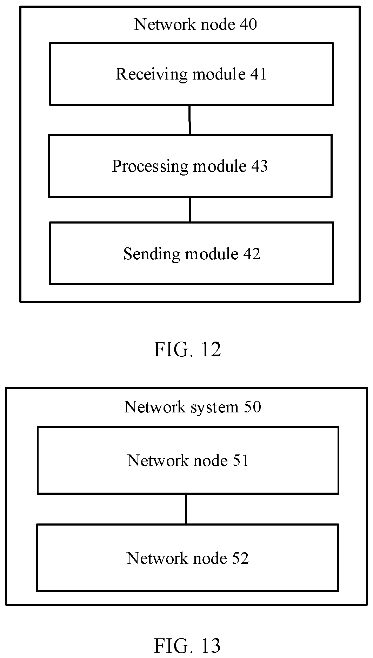

An embodiment of this application further provides a network node. The following describes a structure and a function of the network node with reference to FIG. 12. FIG. 12 is another schematic block diagram of a network node 40 according to an embodiment of this application. As shown in FIG. 12, the network node 40 includes a receiving module 41 and a sending module 42.

The receiving module 41 and the sending module 42 may be implemented by software or hardware. When the sending module 42 and the receiving module 41 are implemented by hardware, the receiving module 41 may be the receiver 31 in FIG. 11, and the sending module 42 may be the transmitter 32 in FIG. 11.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a communication system. FIG. 13 is a schematic block diagram of a network device 50 according to an embodiment of this application. As shown in FIG. 13, the network system 50 includes a network node 51 and a network node 52. The network node 51 may be the network node 10 shown in FIG. 9, and the network node 52 may be the network node 30 shown in FIG. 11; or the network node 51 may be the network node 20 shown in FIG. 10, and the network node 52 may be the network node 40 shown in FIG. 12.

It should be understood that the network node 51 may correspond to the first network node in the congestion measurement method 300 in the network according to the embodiments of the present invention, and the network node 51 may include modules configured to perform the method performed by the first network node in the congestion measurement method 300 in the network in FIG. 3. The network node 52 may correspond to the second network node in the congestion measurement method 300 in the network according to the embodiments of the present invention, and the network node 52 may include modules configured to perform the method performed by the second network node in the congestion measurement method 300 in the network in FIG. 3. In addition, the modules in the network node 51 and the network node 52 and the foregoing other operations and/or functions are respectively intended to implement corresponding procedures of the congestion measurement method 300 in the network in FIG. 3. For a specific process of the foregoing corresponding steps performed by the units, refer to the foregoing description of the method embodiment in FIG. 3. For brevity, details are not described herein again.

In the network nodes in the foregoing embodiments, for example, the network node 51 and the network node 52, each network node is divided into a data plane and a control plane, where a connection is established between control planes of the network nodes. The control plane is mainly responsible for negotiating measurement capabilities and measurement parameters (for example, a time interval for collecting statistics about a congestion status). The data plane is mainly responsible for sending and receiving measurement packets, returning measurement results (for example, a statistics packet), and the like, and performing actual measurement to form a connection between data planes. For example, in the method 300, a data plane of the first network node is connected to a data plane of the second network node. When the data plane of the first network node is connected to the data plane of the second network node, the data plane of the second network node is mainly responsible for sending a measurement packet (for example, a first measurement packet) to the first network node. Correspondingly, the data plane of the first network node receives the measurement packet sent by the second network node. Alternatively, the data plane of the first network node sends a measurement result (for example, a first-type statistics packet) to the second network node. A control plane of the first network node is connected to a control plane of the second network node. When the control plane of the first network node is connected to the control plane of the second network node, the control plane of the second network node is mainly responsible for sending a setting packet to the first network node to negotiate measurement parameters between the first network node and the second network node.

All or some of the foregoing embodiments may be implemented by software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve an objective of a solution of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. The units described as separate parts may or may not be physically separate, and parts displayed as units may or may not be physical units, may be located in one position, or may be distributed on a plurality of network units. Some or all of the units may be selected based on an actual requirement to achieve an objective of a solution of the embodiments.

**Claims**

1. A congestion measurement method, wherein the method is performed in a communication system comprising a first network node and a second network node, is applied to the first network node, and comprises:

   receiving (330) a first delimitation packet, wherein the first delimitation packet comprises a first identifier, and the first identifier is used to indicate a moment at which the second network node sends the first delimitation packet;
   collecting (340), based on the first delimitation packet, statistics about a congestion status of the first network node by using a first time interval as a periodicity, wherein the first time interval is a time interval at which the second network node sends two neighboring delimitation packets; and
   sending (360) a first-type statistics packet to the second network node by using the first time interval as a periodicity, wherein the first-type statistics packet comprises the first identifier, and the first-type statistics packet is used to indicate the congestion status of the first network node in the first time interval.

2. The method according to claim 1, wherein the first-type statistics packet comprises a first receiving rate of the first network node in the first time interval.

3. The method according to claim 1 or 2, wherein the method further comprises:

   receiving (350) a second delimitation packet at a third moment, wherein the second delimitation packet comprises a second identifier, and the second identifier is used to indicate a moment at which the second network node sends the second delimitation packet; the second delimitation packet and the first delimitation packet are two neighboring delimitation packets; and a time interval between the third moment and a first moment is greater than the first time interval, and the first moment is a moment at which the first network node receives the first delimitation packet; and

finishing collecting statistics about the congestion status of the first network node based on the second delimitation packet.

4. The method according to claim 3, wherein when the third moment and a start moment or an end moment of the first time interval do not overlap, after the finishing collecting statistics about the congestion status of the first network node based on the second delimitation packet, the method further comprises:
sending (350) a second-type statistics packet to the second network node at the third moment, wherein the second-type statistics packet comprises the first identifier, and the second-type statistics packet is used to indicate a congestion status of the first network node in a time interval between the third moment and the start moment of the first time interval in which the third moment is located.

5. The method according to claim 4, wherein the second-type statistics packet comprises a second receiving rate of the first network node in the time interval between the third moment and the start moment of the first time interval in which the third moment is located.

6. The method according to claim 4 or 5, wherein when the third moment and the start moment or the end moment of the first time interval do not overlap, the method further comprises:

collecting (370) statistics about a congestion status in a time interval between the third moment and the end moment of the first time interval in which the third moment is located; and sending a third-type statistics packet to the second network node at the end moment of the first time interval in which the third moment is located, wherein the third-type statistics packet comprises the second identifier, and the third-type statistics packet is used to indicate the congestion status of the first network node in the time interval between the third moment and the end moment of the first time interval in which the third moment is located.

7. A congestion measurement method, wherein the method is performed in a communication system comprising a first network node and a second network node, is applied to the second network node, and comprises:

sending (330) a first delimitation packet, wherein the first delimitation packet comprises a first identifier, and the first identifier is used to indicate a moment at which the second network node sends the first delimitation packet;
sending (350) a second delimitation packet, wherein the second delimitation packet comprises a second identifier, and the second identifier is used to indicate a moment at which the second network node sends the second delimitation packet; the second delimitation packet and the first delimitation packet are two neighboring delimitation packets; and a time interval at which the second network node sends the two neighboring delimitation packets is a first time interval;
collecting (370) statistics about first data based on the first delimitation packet and the second delimitation packet, wherein the first data is used to indicate a congestion status in the first time interval;
receiving, by using the first time interval as a periodicity, a first-type statistics packet sent by the first network node, wherein the first-type statistics packet comprises the first identifier, and the first-type statistics packet is used to indicate a congestion status of the first network node in the first time interval; and
obtaining (380) a first congestion degree based on the first data and the first-type statistics packet, wherein the first congestion degree is used to indicate a congestion degree in the first time interval.

8. The method according to claim 7, wherein the method further comprises:

receiving a second-type statistics packet, wherein the second-type statistics packet comprises the first identifier, the second-type statistics packet is used to indicate a congestion status of the first network node in a time interval between a third moment and a start moment of the first time interval in which the third moment is located, and the third moment is a moment at which the first network node receives the second delimitation packet; and
obtaining a second congestion degree based on the first data and the second-type statistics packet, wherein the second congestion degree is used to indicate a congestion degree in the time interval between the third moment and the start moment of the first time interval in which the third moment is located.

9. The method according to claim 7 or 8, wherein the method further comprises:

   receiving a third-type statistics packet, wherein the third-type statistics packet comprises the second identifier, and the third-type statistics packet is used to indicate a congestion status of the first network node in a time interval between the third moment and an end moment of the first time interval in which the third moment is located;
   collecting statistics about second data, wherein the second data is used to indicate a congestion status in the first time interval between a fourth moment and a fifth moment, the fourth moment is a moment at which the second network node sends the second delimitation packet, a time interval between the fifth moment and the fourth moment is the first time interval, and the fifth moment is later than the fourth moment;
   obtaining a third congestion degree based on the second data and the third-type statistics packet, wherein the third congestion degree is used to indicate a congestion degree in the time interval between the third moment and the end moment of the first time interval in which the third moment is located; and
   obtaining a fourth congestion degree based on the second congestion degree and the third congestion degree, wherein the fourth congestion degree is used to indicate a congestion degree in the first time interval in which the third moment is located.

10. The method according to any one of claims 7 to 9, wherein the method further comprises:
    sending a setting packet, wherein the setting packet is used to indicate a time interval at which the first network node collects statistics about the congestion status, and the setting packet comprises the first time interval.

11. A network node (20), wherein the network node (20) comprises a first network node and a second network node, the network node (20) is the first network node, and the network node comprises:

    a receiving module (21), configured to receive a first delimitation packet, wherein the first delimitation packet comprises a first identifier, and the first identifier is used to indicate a moment at which the second network node sends the first delimitation packet;
    a processing module (23), configured to collect, based on the first delimitation packet, statistics about a congestion status of the network node by using a first time interval as a periodicity, wherein the first time interval is a time interval at which the second network node sends two neighboring delimitation packets; and
    a sending module (22), configured to send a first-type statistics packet to the second network node by using the first time interval as a periodicity, wherein the first-type statistics packet comprises the first identifier, and the first-type statistics packet is used to indicate a congestion status of the network node in the first time interval.

12. The network node (20) according to claim 11, wherein the first-type statistics packet comprises a first receiving rate of the network node in the first time interval.

13. The network node (20) according to claim 11 or 12, wherein the receiving module (21) is further configured to: receive a second delimitation packet at a third moment, wherein the second delimitation packet comprises a second identifier, and the second identifier is used to indicate a moment at which the second network node sends the second delimitation packet; the second delimitation packet and the first delimitation packet are two neighboring delimitation packets; a time interval between the third moment and a first moment is greater than the first time interval, and the first moment is a moment at which the network node receives the first delimitation packet; and
    the processing module (23) is further configured to: finish collecting statistics about the congestion status of the network node based on the second delimitation packet.

14. The network node (20) according to claim 13, wherein when the third moment and a start moment or an end moment of the first time interval do not overlap, the sending module is further configured to:
    send a second-type statistics packet to the second network node at the third moment, wherein the second-type statistics packet comprises the first identifier, and the second-type statistics packet is used to indicate a congestion status of the network node in a time interval between the third moment and the start moment of the first time interval in which the third moment is located.

15. The network node (20) according to claim 14, wherein the second-type statistics packet comprises a second receiving rate of the network node in the time interval between the third moment and the start moment of the first time interval in which the third moment is located.

**Patentansprüche**

1. Verfahren für eine Überlastungsmessung, wobei das Verfahren in einem Kommunikationssystem durchgeführt wird, das einen ersten Netzwerkknoten und einen zweiten Netzwerkknoten umfasst, auf den ersten Netzwerkknoten angewendet wird und Folgendes umfasst:

   Empfangen (330) eines ersten Abgrenzungspakets, wobei das erste Abgrenzungspaket eine erste Kennung umfasst und die erste Kennung verwendet wird, um einen Zeitpunkt anzugeben, zu dem der zweite Netzwerkknoten das erste Abgrenzungspaket sendet;
   Sammeln (340), basierend auf dem ersten Abgrenzungspaket, von Statistiken über einen Überlastungsstatus des ersten Netzwerkknotens durch Verwenden eines ersten Zeitintervalls als Periodizität, wobei das erste Zeitintervall ein Zeitintervall ist, in dem der zweite Netzwerkknoten zwei benachbarte Abgrenzungspakete sendet; und
   Senden (360) eines Statistikpakets einer ersten Art an den zweiten Netzwerkknoten durch Verwenden des ersten Zeitintervalls als Periodizität, wobei das Statistikpaket der ersten Art die erste Kennung umfasst und das Statistikpaket der ersten Art verwendet wird, um den Überlastungsstatus des ersten Netzwerkknotens in dem ersten Zeitintervall anzugeben.

2. Verfahren nach Anspruch 1, wobei das Statistikpaket der ersten Art eine erste Empfangsrate des ersten Netzwerkknotens in dem ersten Zeitintervall umfasst.

3. Verfahren nach Anspruch 1 oder 2, wobei das Verfahren ferner umfasst:

   Empfangen (350) eines zweiten Abgrenzungspakets zu einem dritten Zeitpunkt, wobei das zweite Abgrenzungspaket eine zweite Kennung umfasst und die zweite Kennung verwendet wird, um einen Zeitpunkt anzugeben, zu dem der zweite Netzwerkknoten das zweite Abgrenzungspaket sendet; das zweite Abgrenzungspaket und das erste Abgrenzungspaket zwei benachbarte Abgrenzungspakete sind; und ein Zeitintervall zwischen dem dritten Zeitpunkt und einem ersten Zeitpunkt größer als das erste Zeitintervall ist und der erste Zeitpunkt ein Zeitpunkt ist, zu dem der erste Netzwerkknoten das erste Abgrenzungspaket empfängt; und
   Beenden des Sammelns von Statistiken über den Überlastungsstatus des ersten Netzwerkknotens basierend auf dem zweiten Abgrenzungspaket.

4. Verfahren nach Anspruch 3, wobei, wenn sich der dritte Zeitpunkt und ein Startzeitpunkt oder ein Endzeitpunkt des ersten Zeitintervalls nicht überlappen, nach dem Beenden des Sammelns von Statistiken über den Überlastungsstatus des ersten Netzwerkknotens basierend auf dem zweiten Abgrenzungspaket das Verfahren ferner umfasst:
   Senden (350) eines Statistikpakets einer zweiten Art an den zweiten Netzwerkknoten zu dem dritten Zeitpunkt, wobei das Statistikpaket der zweiten Art die erste Kennung umfasst und das Statistikpaket der zweiten Art verwendet wird, um einen Überlastungsstatus des ersten Netzwerkknotens in einem Zeitintervall zwischen dem dritten Zeitpunkt und dem Startzeitpunkt des ersten Zeitintervalls anzugeben, in dem der dritte Zeitpunkt liegt.

5. Verfahren nach Anspruch 4, wobei das Statistikpaket der zweiten Art eine zweite Empfangsrate des ersten Netzwerkknotens in dem Zeitintervall zwischen dem dritten Zeitpunkt und dem Startzeitpunkt des ersten Zeitintervalls umfasst, in dem der dritte Zeitpunkt liegt.

6. Verfahren nach Anspruch 4 oder 5, wobei, wenn sich der dritte Zeitpunkt und der Startzeitpunkt oder der Endzeitpunkt des ersten Zeitintervalls nicht überlappen, das Verfahren ferner umfasst:

   Sammeln (370) von Statistiken über einen Überlastungsstatus in einem Zeitintervall zwischen dem dritten Zeitpunkt und dem Endzeitpunkt des ersten Zeitintervalls, in dem der dritte Zeitpunkt liegt; und
   Senden eines Statistikpakets einer dritten Art an den zweiten Netzwerkknoten zu dem Endzeitpunkt des ersten Zeitintervalls, in dem der dritte Zeitpunkt liegt, wobei das Statistikpaket der dritten Art die zweite Kennung umfasst und das Statistikpaket der dritten Art verwendet wird, um den Überlastungsstatus des ersten Netzwerkknotens in dem Zeitintervall zwischen dem dritten Zeitpunkt und dem Endzeitpunkt des ersten Zeitintervalls anzugeben, in dem der dritte Zeitpunkt liegt.

7. Verfahren für die Überlastungsmessung, wobei das Verfahren in einem Kommunikationssystem durchgeführt wird, das einen ersten Netzwerkknoten und einen zweiten Netzwerkknoten umfasst, auf den zweiten Netzwerkknoten angewendet wird und Folgendes umfasst:

   Senden (330) eines ersten Abgrenzungspakets, wobei das erste Abgrenzungspaket eine erste Kennung umfasst und die erste Kennung verwendet wird, um einen Zeitpunkt anzugeben, zu dem der zweite Netzwerkknoten das erste Abgrenzungspaket sendet;

Senden (350) eines zweiten Abgrenzungspakets, wobei das zweite Abgrenzungspaket eine zweite Kennung umfasst und die zweite Kennung verwendet wird, um einen Zeitpunkt anzugeben, zu dem der zweite Netzwerkknoten das zweite Abgrenzungspaket sendet; das zweite Abgrenzungspaket und das erste Abgrenzungspaket zwei benachbarte Abgrenzungspakete sind; und ein Zeitintervall, in dem der zweite Netzwerkknoten die zwei benachbarten Abgrenzungspakete sendet, ein erstes Zeitintervall ist;

Sammeln (370) von Statistiken über erste Daten basierend auf dem ersten Abgrenzungspaket und dem zweiten Abgrenzungspaket, wobei die ersten Daten verwendet werden, um einen Überlastungsstatus in dem ersten Zeitintervall anzugeben;

Empfangen, durch Verwenden des ersten Zeitintervalls als Periodizität, eines durch den ersten Netzwerkknoten gesendeten Statistikpakets der ersten Art, wobei das Statistikpaket der ersten Art die erste Kennung umfasst und das Statistikpaket der ersten Art verwendet wird, um einen Überlastungsstatus des ersten Netzwerkknotens in dem ersten Zeitintervall anzugeben; und

Erhalten (380) eines ersten Überlastungsgrads basierend auf den ersten Daten und dem Statistikpaket der ersten Art, wobei der erste Überlastungsgrad verwendet wird, um einen Überlastungsgrad in dem ersten Zeitintervall anzugeben.

8. Verfahren nach Anspruch 7, wobei das Verfahren ferner umfasst:

Empfangen eines Statistikpakets der zweiten Art, wobei das Statistikpaket der zweiten Art die erste Kennung umfasst, das Statistikpaket der zweiten Art verwendet wird, um einen Überlastungsstatus des ersten Netzwerkknotens in einem Zeitintervall zwischen einem dritten Zeitpunkt und einem Startzeitpunkt des ersten Zeitintervalls anzugeben, in dem der dritte Zeitpunkt liegt, und der dritte Zeitpunkt ein Zeitpunkt ist, zu dem der erste Netzwerkknoten das zweite Abgrenzungspaket empfängt; und

Erhalten eines zweiten Überlastungsgrads basierend auf den ersten Daten und dem Statistikpaket der zweiten Art, wobei der zweite Überlastungsgrad verwendet wird, um einen Überlastungsgrad in dem Zeitintervall zwischen dem dritten Zeitpunkt und dem Startzeitpunkt des ersten Zeitintervalls anzugeben, in dem der dritte Zeitpunkt liegt.

9. Verfahren nach Anspruch 7 oder 8, wobei das Verfahren ferner umfasst:

Empfangen eines Statistikpakets der dritten Art, wobei das Statistikpaket der dritten Art die zweite Kennung umfasst und das Statistikpaket der dritten Art verwendet wird, um einen Überlastungsstatus des ersten Netzwerkknotens in einem Zeitintervall zwischen dem dritten Zeitpunkt und einem Endzeitpunkt des ersten Zeitintervalls anzugeben, in dem der dritte Zeitpunkt liegt;

Sammeln von Statistiken über zweite Daten, wobei die zweiten Daten verwendet werden, um einen Überlastungsstatus in dem ersten Zeitintervall zwischen einem vierten Zeitpunkt und einem fünften Zeitpunkt anzugeben, wobei der vierte Zeitpunkt ein Zeitpunkt ist, zu dem der zweite Netzwerkknoten das zweite Abgrenzungspaket sendet, wobei ein Zeitintervall zwischen dem fünften Zeitpunkt und dem vierten Zeitpunkt das erste Zeitintervall ist und wobei der fünfte Zeitpunkt später als der vierte Zeitpunkt liegt;

Erhalten eines dritten Überlastungsgrads basierend auf den zweiten Daten und dem Statistikpaket der dritten Art, wobei der dritte Überlastungsgrad verwendet wird, um einen Überlastungsgrad in dem Zeitintervall zwischen dem dritten Zeitpunkt und dem Endzeitpunkt des ersten Zeitintervalls anzugeben, in dem der dritte Zeitpunkt liegt; und

Erhalten eines vierten Überlastungsgrads basierend auf dem zweiten Überlastungsgrad und dem dritten Überlastungsgrad, wobei der vierte Überlastungsgrad verwendet wird, um einen Überlastungsgrad in dem ersten Zeitintervall anzugeben, in dem der dritte Zeitpunkt liegt.

10. Verfahren nach einem der Ansprüche 7 bis 9, wobei das Verfahren ferner umfasst:

Senden eines Einstellungspakets, wobei das Einstellungspaket verwendet wird, um ein Zeitintervall anzugeben, in dem der erste Netzwerkknoten Statistiken über den Überlastungsstatus sammelt, und das Einstellungspaket das erste Zeitintervall umfasst.

11. Netzwerkknoten (20), wobei der Netzwerkknoten (20) einen ersten Netzwerkknoten und einen zweiten Netzwerkknoten umfasst, der Netzwerkknoten (20) der erste Netzwerkknoten ist und der Netzwerkknoten Folgendes umfasst:

ein Empfangsmodul (21), das konfiguriert ist, um ein erstes Abgrenzungspaket zu empfangen, wobei das erste Abgrenzungspaket eine erste Kennung umfasst und die erste Kennung verwendet wird, um einen Zeitpunkt anzugeben, zu dem der zweite Netzwerkknoten das erste Abgrenzungspaket sendet;

ein Verarbeitungsmodul (23), das konfiguriert ist, um basierend auf dem ersten Abgrenzungspaket Statistiken über einen Überlastungsstatus des Netzwerkknotens durch Verwenden eines ersten Zeitintervalls als Periodizität zu sammeln, wobei das erste Zeitintervall ein Zeitintervall ist, in dem der zweite Netzwerkknoten zwei benachbarte Abgrenzungspakete sendet; und

ein Sendemodul (22), das konfiguriert ist, um ein Statistikpaket der ersten Art durch Verwenden des ersten Zeitintervalls als Periodizität an den zweiten Netzwerkknoten zu senden, wobei das Statistikpaket der ersten Art die erste Kennung umfasst und das Statistikpaket der ersten Art verwendet wird, um einen Überlastungsstatus des Netzwerkknotens in dem ersten Zeitintervall anzugeben.

12. Netzwerkknoten (20) nach Anspruch 11, wobei das Statistikpaket der ersten Art eine erste Empfangsrate des Netzwerkknotens in dem ersten Zeitintervall umfasst.

13. Netzwerkknoten (20) nach Anspruch 11 oder 12, wobei das Empfangsmodul (21) ferner konfiguriert ist zum: Empfangen eines zweiten Abgrenzungspakets zu einem dritten Zeitpunkt, wobei das zweite Abgrenzungspaket eine zweite Kennung umfasst und die zweite Kennung verwendet wird, um einen Zeitpunkt anzugeben, zu dem der zweite Netzwerkknoten das zweite Abgrenzungspaket sendet; das zweite Abgrenzungspaket und das erste Abgrenzungspaket zwei benachbarte Abgrenzungspakete sind; ein Zeitintervall zwischen dem dritten Zeitpunkt und einem ersten Zeitpunkt größer als das erste Zeitintervall ist und der erste Zeitpunkt ein Zeitpunkt ist, zu dem der Netzwerkknoten das erste Abgrenzungspaket empfängt; und das Verarbeitungsmodul (23) ferner konfiguriert ist zum: Beenden des Sammelns von Statistiken über den Überlastungsstatus des Netzwerkknotens basierend auf dem zweiten Abgrenzungspaket.

14. Netzwerkknoten (20) nach Anspruch 13, wobei, wenn sich der dritte Zeitpunkt und ein Startzeitpunkt oder ein Endzeitpunkt des ersten Zeitintervalls nicht überlappen, das Sendemodul ferner konfiguriert ist zum:

Senden eines Statistikpakets der zweiten Art an den zweiten Netzwerkknoten zu dem dritten Zeitpunkt, wobei das Statistikpaket der zweiten Art die erste Kennung umfasst und das Statistikpaket der zweiten Art verwendet wird, um einen Überlastungsstatus des Netzwerkknotens in einem Zeitintervall zwischen dem dritten Zeitpunkt und dem Startzeitpunkt des ersten Zeitintervalls anzugeben, in dem der dritte Zeitpunkt liegt.

15. Netzwerkknoten (20) nach Anspruch 14, wobei das Statistikpaket der zweiten Art eine zweite Empfangsrate des Netzwerkknotens in dem Zeitintervall zwischen dem dritten Zeitpunkt und dem Startzeitpunkt des ersten Zeitintervalls umfasst, in dem der dritte Zeitpunkt liegt.

## Revendications

1. Procédé de mesure d'encombrement, dans lequel le procédé est réalisé dans un système de communication comprenant un premier nœud de réseau et un second nœud de réseau, appliqué au premier nœud de réseau et comprenant :

la réception (330) d'un premier paquet de délimitation, dans lequel le premier paquet de délimitation comprend un premier identifiant, et le premier identifiant est utilisé pour indiquer le moment auquel le second nœud de réseau envoie le premier paquet de délimitation ;

la collecte (340), sur la base du premier paquet de délimitation, de statistiques concernant un état d'encombrement du premier nœud de réseau en utilisant un premier intervalle de temps comme périodicité, dans lequel le premier intervalle de temps est un intervalle de temps au cours duquel le second nœud de réseau envoie deux paquets de délimitation voisins ; et

l'envoi (360) d'un paquet de statistiques de premier type au second nœud de réseau en utilisant le premier intervalle de temps comme périodicité, dans lequel le paquet de statistiques de premier type comprend le premier identifiant et le paquet de statistiques de premier type est utilisé pour indiquer l'état d'encombrement du premier nœud de réseau dans le premier intervalle de temps.

2. Procédé selon la revendication 1, dans lequel le paquet de statistiques de premier type comprend un premier taux de réception du premier nœud de réseau dans le premier intervalle de temps.

3. Procédé selon la revendication 1 ou 2, dans lequel le procédé comprend en outre :

la réception (350) d'un second paquet de délimitation à un troisième moment, dans lequel le second paquet de délimitation comprend un second identifiant, et le second identifiant est utilisé pour indiquer le moment auquel le second nœud de réseau envoie le second paquet de délimitation ; le second paquet de délimitation et le premier paquet de délimitation sont deux paquets de délimitation voisins ; et un intervalle de temps entre le troisième moment et un premier moment est supérieur au premier intervalle de temps, et le premier moment est un moment auquel le premier nœud de réseau reçoit le premier paquet de délimitation ; et

la fin de la collecte de statistiques concernant l'état d'encombrement du premier nœud de réseau sur la base du second paquet de délimitation.

4. Procédé selon la revendication 3, dans lequel, lorsque le troisième moment et un moment de début ou un moment de fin du premier intervalle de temps ne se chevauchent pas, après la fin de la collecte de statistiques concernant l'état d'encombrement du premier nœud de réseau sur la base du second paquet de délimitation, le procédé comprend en outre :

l'envoi (350) d'un paquet de statistiques de deuxième type au second nœud de réseau au troisième moment, dans lequel le paquet de statistiques de deuxième type comprend le premier identifiant, et le paquet de statistiques de deuxième type est utilisé pour indiquer un état d'encombrement du premier nœud de réseau dans un intervalle de temps entre le troisième moment et le moment de début du premier intervalle de temps dans lequel se trouve le troisième moment.

5. Procédé selon la revendication 4, dans lequel le paquet de statistiques de deuxième type comprend un second taux de réception du premier nœud de réseau dans l'intervalle de temps entre le troisième moment et le moment de début du premier intervalle de temps dans lequel se trouve le troisième moment.

6. Procédé selon la revendication 4 ou 5, dans lequel, lorsque le troisième moment et le moment de début ou le moment de fin du premier intervalle de temps ne se chevauchent pas, le procédé comprend en outre :

la collecte (370) de statistiques concernant un état d'encombrement dans un intervalle de temps entre le troisième moment et le moment de fi, du premier intervalle de temps dans lequel se trouve le troisième moment ; et

l'envoi d'un paquet de statistiques de troisième type au second nœud de réseau au moment de fin du premier intervalle de temps dans lequel se trouve le troisième moment, dans lequel le paquet de statistiques de troisième type comprend le second identifiant et le paquet de statistiques de troisième type est utilisé pour indiquer l'état d'encombrement du premier nœud de réseau dans l'intervalle de temps entre le troisième moment et le moment de fin du premier intervalle de temps dans lequel se trouve le troisième moment.

7. Procédé de mesure d'encombrement, dans lequel le procédé est réalisé dans un système de communication comprenant un premier nœud de réseau et un second nœud de réseau, appliquée au second nœud de réseau et comprenant :

l'envoi (330) d'un premier paquet de délimitation, dans lequel le premier paquet de délimitation comprend un premier identifiant, et le premier identifiant est utilisé pour indiquer le moment auquel le second nœud de réseau envoie le premier paquet de délimitation ;

l'envoi (350) d'un second paquet de délimitation, dans lequel le second paquet de délimitation comprend un second identifiant, et le second identifiant est utilisé pour indiquer le moment auquel le second nœud de réseau envoie le second paquet de délimitation ; le second paquet de délimitation et le premier paquet de délimitation sont deux paquets de délimitation voisins ; et un intervalle de temps au cours duquel le second nœud de réseau envoie les deux paquets de délimitation voisins est un premier intervalle de temps ;

la collecte (370) de statistiques concernant de premières données sur la base du premier paquet de délimitation et du second paquet de délimitation, dans lequel les premières données sont utilisées pour indiquer un état d'encombrement dans le premier intervalle de temps ;

la réception, en utilisant le premier intervalle de temps comme périodicité, un paquet de statistiques de premier type envoyé par le premier nœud de réseau, dans lequel le paquet de statistiques de premier type comprend le premier identifiant, et le paquet de statistiques de premier type est utilisé pour indiquer un état d'encombrement du premier nœud de réseau dans le premier intervalle de temps ; et

l'obtention (380) d'un premier degré d'encombrement sur la base des premières données et du paquet de statistiques de premier type, dans lequel le premier degré d'encombrement est utilisé pour indiquer un degré d'encombrement dans le premier intervalle de temps.

8. Procédé selon la revendication 7, dans lequel le procédé comprend en outre :

la réception d'un paquet de statistiques de deuxième type, dans lequel le paquet de statistiques de deuxième type comprend le premier identifiant, le paquet de statistiques de deuxième type est utilisé pour indiquer un état d'encombrement du premier nœud de réseau dans un intervalle de temps entre un troisième moment et un moment de début du premier intervalle de temps dans lequel le troisième moment se trouve, et le troisième moment est un moment auquel le premier nœud de réseau reçoit le second paquet de délimitation ; et

l'obtention d'un deuxième degré d'encombrement sur la base des premières données et du paquet de statistiques de deuxième type, dans lequel le deuxième degré d'encombrement est utilisé pour indiquer un degré d'encombrement dans l'intervalle de temps entre le troisième moment et le moment de début du premier intervalle de temps dans lequel se trouve le troisième moment.

9. Procédé selon la revendication 7 ou 8, dans lequel le procédé comprend en outre :

la réception d'un paquet de statistiques de troisième type, dans lequel le paquet de statistiques de troisième type comprend le second identifiant, et le paquet de statistiques de troisième type est utilisé pour indiquer un état d'encombrement du premier nœud de réseau dans un intervalle de temps entre le troisième moment et un moment de fin du premier intervalle de temps dans lequel le troisième moment se trouve ;

la collecte de statistiques concernant de secondes données, dans lequel les secondes données sont utilisées pour indiquer un état d'encombrement dans le premier intervalle de temps entre un quatrième moment et un cinquième moment, le quatrième moment est un moment auquel le second nœud de réseau envoie le second paquet de délimitation, un intervalle de temps entre le cinquième moment et le quatrième moment est le premier intervalle de temps, et le cinquième moment est postérieur au quatrième moment ;

l'obtention d'un troisième degré d'encombrement sur la base des secondes données et du paquet de statistiques de troisième type, dans lequel le troisième degré d'encombrement est utilisé pour indiquer un degré d'encombrement dans l'intervalle de temps entre le troisième moment et le moment de fin du premier intervalle de temps dans lequel se trouve le troisième moment ; et

l'obtention d'un quatrième degré d'encombrement sur la base du deuxième degré d'encombrement et du troisième degré d'encombrement, dans lequel le quatrième degré d'encombrement est utilisé pour indiquer un degré d'encombrement dans le premier intervalle de temps dans lequel se trouve le troisième moment.

10. Procédé selon l'une quelconque des revendications 7 à 9, dans lequel le procédé comprend en outre : l'envoi d'un paquet de réglage, dans lequel le paquet de réglage est utilisé pour indiquer un intervalle de temps au cours duquel le premier nœud de réseau collecte des statistiques concernant l'état d'encombrement, et le paquet de réglage comprend le premier intervalle de temps.

11. Nœud de réseau (20), dans lequel le nœud de réseau (20) comprend un premier nœud de réseau et un second nœud de réseau, le nœud de réseau (20) est le premier nœud de réseau, et le nœud de réseau comprend :

un module de réception (21), configuré pour recevoir un premier paquet de délimitation, dans lequel le premier paquet de délimitation comprend un premier identifiant, et le premier identifiant est utilisé pour indiquer un moment auquel le second nœud de réseau envoie le premier paquet de délimitation ;

un module de traitement (23), configuré pour collecter, sur la base du premier paquet de délimitation, des statistiques concernant l'état d'encombrement du nœud de réseau en utilisant un premier intervalle de temps comme périodicité, dans lequel le premier intervalle de temps est un intervalle de temps au cours duquel le second nœud de réseau envoie deux paquets de délimitation voisins ; et

un module d'envoi (22), configuré pour envoyer un paquet de statistiques de premier type au second nœud de réseau en utilisant le premier intervalle de temps comme périodicité, dans lequel le paquet de statistiques de premier type comprend le premier identifiant et le paquet de statistiques de premier type est utilisé pour indiquer un état d'encombrement du nœud de réseau dans le premier intervalle de temps.

12. Nœud de réseau (20) selon la revendication 11, dans lequel le paquet de statistiques de premier type comprend un premier taux de réception du nœud de réseau dans le premier intervalle de temps.

13. Nœud de réseau (20) selon la revendication 11 ou 12, dans lequel le module de réception (21) est en outre configuré pour : recevoir un second paquet de délimitation à un troisième moment, dans lequel le second paquet de délimitation comprend un second identifiant, et le second identifiant est utilisé pour indiquer un moment auquel le second nœud de réseau envoie le second paquet de délimitation ; le second paquet de délimitation et le premier paquet de délimitation sont deux paquets de délimitation voisins ; un intervalle de temps entre le troisième moment et un premier moment est supérieur au premier intervalle de temps, et le premier moment est un moment auquel le nœud de réseau reçoit le premier paquet de délimitation ; et

le module de traitement (23) est en outre configuré pour : terminer la collecte de statistiques concernant l'état d'encombrement du nœud de réseau sur la base du second paquet de délimitation.

14. Nœud de réseau (20) selon la revendication 13, dans lequel, lorsque le troisième moment et un moment de début ou un moment de fin du premier intervalle de temps ne se chevauchent pas, le module d'envoi est en outre configuré pour :

envoyer un paquet de statistiques de deuxième type au second nœud de réseau au troisième moment, dans lequel le paquet de statistiques de deuxième type comprend le premier identifiant et le paquet de statistiques de deuxième type est utilisé pour indiquer un état d'encombrement du nœud de réseau dans un intervalle de temps entre le troisième moment et le moment de début du premier intervalle de temps dans lequel se trouve le troisième moment.

15. Nœud de réseau (20) selon la revendication 14, dans lequel le paquet de statistiques de deuxième type comprend un second taux de réception du nœud de réseau dans l'intervalle de temps entre le troisième moment et le moment de début du premier intervalle de temps dans lequel le troisième moment se trouve.

FIG. 1

Second network node        First network node

FIG. 2

300

Second network node

First network node

310: Set, as a first time interval, a time interval at which the first network node collects statistics about a congestion status

320: Acknowledgment packet

330: First delimitation packet

340: Collect, based on the first delimitation packet, statistics about the congestion status of the first network node in the first time interval by using the first time interval as a periodicity

350: Second delimitation packet

360: First-type statistics packet

370: Collect statistics about first data

380: Obtain a first congestion degree based on the first data and the first-type statistics packet

FIG. 3

| Packet type (ControlCode) | Reserved (Reserve) | Reserved (Reserve) |
|---|---|---|
| Tunnel identifier (Session id) path identifier (Path ID) | | |
| Statistics interval time (Interval time) | | |

## FIG. 4

| Packet type (ControlCode) | Accept (Accept) | Reserved (Reserve) |
|---|---|---|
| Tunnel identifier (Session id) path identifier (Path ID) | | |
| Statistics interval time (Interval time) | | |

## FIG. 5

| Tunnel identifier (Session id) path identifier (Path ID) | | Packet header (Header) |
|---|---|---|
| Data-area-stored data type (Path-E2E-Type) | | |
| Packet type (Flags) | Transaction number (Transaction ID) | |
| Data (Data) | | Data (Data) |

## FIG. 6

FIG. 7

FIG. 8

FIG. 9

Network node 20

Receiving module 21

Processing module 23

Sending module 22

FIG. 10

Network node 30

Processor
33

Memory
34

Receiver
31

Transmitter
32

FIG. 11

Network node 40

Receiving module 41

Processing module 43

Sending module 42

FIG. 12

Network system 50

Network node 51

Network node 52

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019033857 A1
- US 2012120801 A1
- WO 2016119822 A1